# EUROPÄISCHE PATENTSCHRIFT

(11) **EP 2 909 215 B1**
(45) Veröffentlichungstag und Bekanntmachung des Hinweises auf die Patenterteilung: **29.03.2017**
(21) Anmeldenummer: 12775443.0
(22) Anmeldetag: 16.10.2012
(51) Int. Cl.: C07F 3/00, C07F 3/02, C07F 3/06, C09K 21/10, C09K 21/12, C07F 9/6521, C08K 5/52, C08K 5/5313, C07F 9/06

(54) **AZIN-METALLPHOSPHATE ALS FLAMMHEMMENDE MITTEL**
AZINE METAL PHOSPHATES AS FLAME-RETARDANT MATERIALS
PHOSPHATES AZINO-MÉTALLIQUES UTILISÉS COMME AGENTS IGNIFUGES

(43) Veröffentlichungstag der Anmeldung: 26.08.2015
(73) Patentinhaber: J.M. Huber Corporation, Atlanta, GA 30339 (US)
(72) Erfinder: WEHNER, Wolfgang, 64670 Zwingenberg (DE)
(74) Vertreter: Wibbelmann, Jobst
(86) Internationale Anmeldenummer: PCT/EP2012/004329
(87) Internationale Veröffentlichungsnummer: WO 2014/060003

(56) Entgegenhaltungen:
- DE-A1-102007 036 465
- DE-A1-102010 035 103
- US-A- 4 112 016
- J. ALONGI, A. FRACHE: "Flame retardancy properties of .alpha.-zirconium phosphate based compounds", POLYMER DEGRADATION AND STABILITY, Bd. 95, 27. April 2010 (2010-04-27), Seiten 1928-1933, XP55017029,
- DATABASE WPI Week 201071 Thomson Scientific, London, GB; AN 2010-K68146 XP002687804, & CN 101 781 571 A (UNIV SUZHOU SCI&TECHNOLOGY) 21. Juli 2010 (2010-07-21)
- DATABASE WPI Week 201030 Thomson Scientific, London, GB; AN 2010-E60357 XP002687805, & CN 101 693 836 A (UNIV SUZHOU SCI & TECHNOLOGY) 14. April 2010 (2010-04-14)
- S. AYYAPPAN ET AL.: "Synthesis and Structural Characterization of a Chiral Open-Framework Tin(II) Phosphate, [CN3H6][Sn4P3O12] (GUAN-SnPO)", CHEM. MATER., Bd. 10, Nr. 11, 17. Oktober 1998 (1998-10-17), Seiten 3308-3310, XP002687806, ISSN: 0897-4756
- W. T. A. HARRISON, M. L. F. PHILLIPS: "Hydrothermal Syntheses and Single-Crystal Structures of Some Novel Guanidinium-Zinc-Phosphates", CHEM. MATER., Bd. 9, Nr. 8, 2002, XP002687807, ISSN: 0897-4756
- A. SUVITHA, P. MURUGAKOOTHAN: "Synthesis, growth, structural, spectroscopic and optical studies of a semiorganic NLO crystal: zinc guanidinium phosphate", SPECTROCHIMICA ACTA, PART A: MOLECULAR AND BIOMOLECULAR SPECTROSCOPY, Bd. 86, Februar 2012 (2012-02), Seiten 266-270, XP002687808, ISSN: 1386-1425

## Beschreibung

Die vorliegende Erfindung betrifft Azin-Metallphosphate, diese enthaltende Zusammensetzungen, ein Verfahren zu deren Herstellung und deren Verwendung als intumeszierende metallhaltige Flammschutzmittel. Typische Vertreter sind (A-H)⁽⁺⁾ [MtPO₄]⁽⁻⁾*2H₂O und (Mel-H)⁽⁺⁾[AlP₂O₇]⁽⁻⁾ (mit A = Melamin oder Guanidin, Mel = Melamin und Mt = Mg oder Zn).

### Hintergrund und technische Aufgabe der Erfindung

Es ist bekannt, dass intumeszierende Mittel flammhemmend wirken, indem sie unter starker Erwärmung, z.B. unter Einwirkung eines Brandes, zu einer schwerbrennbaren Isolierschicht aufschäumen und hierbei u.a. das Abtropfen geschmolzenen, möglicherweise brennenden Materials, unterdrücken.

Intumeszierende metallhaltige Melaminphosphate sind bereits aus EP 2 183 314 B1 bekannt. Diese haben aber den Nachteil der mangelhaften Thermostabilität. So gibt beispielsweise das dort beschriebene Aluminiumsalz [(Mel-H)]₃⁽⁺⁾ [Al(HPO₄)₃]⁽³⁻⁾ bei der thermischen Behandlung bei 280 bis 300 °C ein Mol Melamin und zwei Mol Wasser ab, wobei [(Mel-H)]₂⁽⁺⁾[AlP₃O₁₀]⁽²⁻⁾ entsteht. Ähnliches gilt auch für [(Mel-H)]₂⁽⁺⁾[MgP₂O₇]⁽²⁻⁾. Ferner sind die dort beschriebenen Produkte nur in einem Mehrstufenprozess erhältlich. Diese Verbindungen besitzen auch allesamt einen nachteiligen Modul (Melamin/Metall-Verhältnis) von 3 oder 2.

Amin-Metallphosphate sind ebenfalls bekannt, wie beispielsweise in Inorg. Chem., 2005, 44, 658-665 und Crystal Growth and Design, 2002, 2(6), 665-673 beschrieben, haben aber wegen ihres Alkylamingehalts eine nicht ausreichende Thermostabilität und sind deshalb als Flammschutzmittel nicht geeignet.

Cyanoguanidin(Dicyandiamid)-Zinkphosphit ist beschrieben in Inorg. Chem., 2001, 40, 895-899, wobei der Modul (Cyanoguanidin/Zink-Verhältnis) 1 beträgt. Guanidin-Zinkphosphate sind in dieser Publikation nicht enthalten. Aminoguanidin-Zinkphosphit ist beschrieben in Intern. J. of Inorg. Mater., 2001, 3, 1033-1038, wobei der Modul (Aminoguanidin/Zink-Verhältnis) 2:3 ist. Die Synthese wird ebenfalls hydrothermal durchgeführt. Aminoguanidin-Zinkphosphate sind in dieser Schrift nicht enthalten. Ein Guanidin-Zinkphosphit wird offenbart in JCS Dalton Trans. 2001, 2459-2461, wobei der Modul (Guanidin/Zink-Verhältnis) 2 ist. Guanidin-Zinkphosphate mit einem Modul von 1 werden nicht beschrieben.

Guanidin-Zink-Phosphate sind ferner publiziert in Chem. Mater., 1997, 9, 1837-1846. Diese werden aber hydrothermal hergestellt, wobei zusätzlich lange Reaktionszeiten erforderlich sind. Außerdem besitzen diese Phosphate einen Modul (Guanidin/Zink-Verhältnis) von 0,5, 2 und 3 und grenzen sich damit scharf von den erfindungsgemäßen Azin-Metallphosphaten ab, die allesamt einen Modul von 1 aufweisen.

Metallfreie intumeszierende Melaminphosphate sind ebenfalls bekannt. So werden mehrere Verfahren zur Herstellung von Melaminpolyphosphaten beschrieben, beispielsweise in WO 00/02869, EP 1 789 475, WO 97/44377 und EP 0 974 588. Diese Verfahren sind aber in der Herstellung zeitaufwendig und wegen der hohen Reaktionstemperaturen (340 bis 400 °C) mit sehr hohem Energieverbrauch verbunden. Zusätzlich wird Harnstoff als weiterer Zusatz verwendet.

Eine bereits im Markt befindliche Formulierung auf Basis von Melaminpolyphosphat ist in EP 1 537 173 B1 beschrieben.

Außerdem gibt es bereits intumeszierende Flammschutzsysteme, welche auf Melamin basieren, wie z.B. auf Melamin-Salzen von 3,9-Dihydroxy-2,4,8,10-tetraoxa-3,9-diphosphaspiro[5,5]-undecan-3,9-dioxid (MAP) und auf Melamin-Salzen von Bis(1-Oxo-2,6,7-trioxa-1-phosphabicyclo[2.2.2]octan-4-ylmethanol)phosphat (Melabis).

Weitere intumeszierend wirkende Systeme sind beschrieben in Kap. 6, Seiten 129-162 "Fire Retardancy of Polymeric Materials", 2. Auflage (2010), Editoren: C. Wilkie, A.B. Morgan, CRS Press, FL, USA.

Flammschutzmittel für Polyamide (PA) und thermoplastische Polyester (PET/PBT) sind detailliert dargestellt in Kap. 5 und 6, Seiten 85-119, "Flame Retardants for Plastics and Textiles", (2009), Autoren: E. Weil und S. Levchik, Hanser Verlag, München.

Die im Stand der Technik beschriebenen Flammschutzmittel besitzen häufig jedoch den Nachteil, dass sie häufig eine nicht ausreichende Flammschutzwirkung aufweisen und für den Einsatz in Kunststoffen, insbesondere thermoplastischen Kunststoffen und Elastomeren im Elektro- und Elektronikbereich, nicht oder nur bedingt einsetzbar sind. Zudem beeinflussen einige phosphorhaltige Flammschutzmittel die elektrische Leitfähigkeit und können somit zum Beispiel die Eigenschaften eines mit Flammschutzmitteln ausgerüsteten thermoplastischen Kunststoffs in elektrischen Bauteilen negativ verändern.

Trotz der zahlreichen aus dem Stand der Technik bekannten Publikationen besteht weiterhin ein Bedarf an Verfahren zur Herstellung von Flammschutzmitteln mit optimierten Eigenschaften und verbesserter Umweltverträglichkeit.

Die Aufgabe der vorliegenden Erfindung bestand deshalb darin, ein Verfahren zur Herstellung von Flammschutzmitteln bereitzustellen, insbesondere mit verbesserten Sekundäreigenschaften, wie geringerer Acidität (höheren pH-Werten) und dadurch geringerer Korrosivität sowie niedrigerer Leitfähigkeit, verglichen mit den aus dem Stand der Technik bekannten Flammschutzmitteln.

Insbesondere war eine Aufgabe der vorliegenden Erfindung, ein Verfahren zur Herstellung eines Flammschutzmittels bereitzustellen, die ein hohes Maß an (Thermo)-Eigenstabilität aufweisen und einem Polymer nach Einarbeitung des Flammschutzmittels hervorragende mechanische Eigenschaften verleihen.

### Beschreibung der Erfindung

### Azin-Metallphosphate

Die vorliegende Erfindung betrifft ein Verfahren zur Herstellung von Azin-Metallphosphaten wie in Anspruch 1 näher ausgeführt.

Die erfindungsgemäß erhaltenen Azin-Metallphosphate sind typischerweise (Koordinations-)Polymere und können, wie am Beispiel des Melamin-Zinkphosphats und des Melamin-Aluminiumphosphats gezeigt, mit alternierenden (Phosphat)-PO₄- und Zn(OP)₄-Tetraedern oder (Diphosphat)-P₂O₇- und Al(OP)₄-Tetraedern formuliert werden (Strukturen la und Ib):

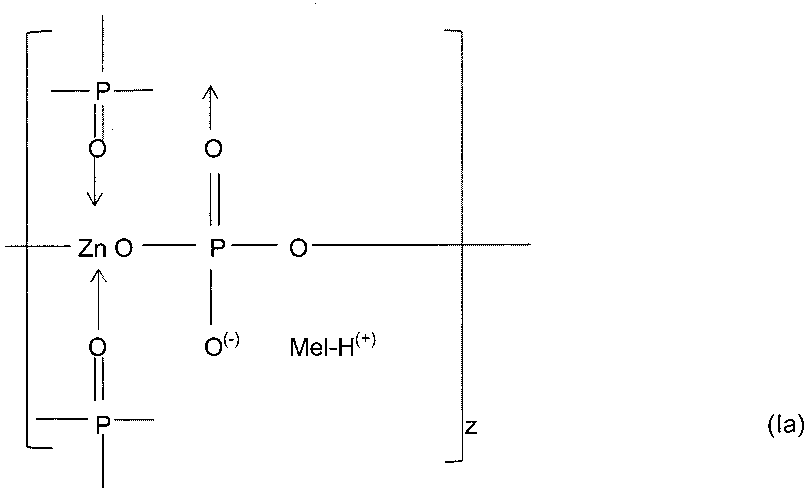

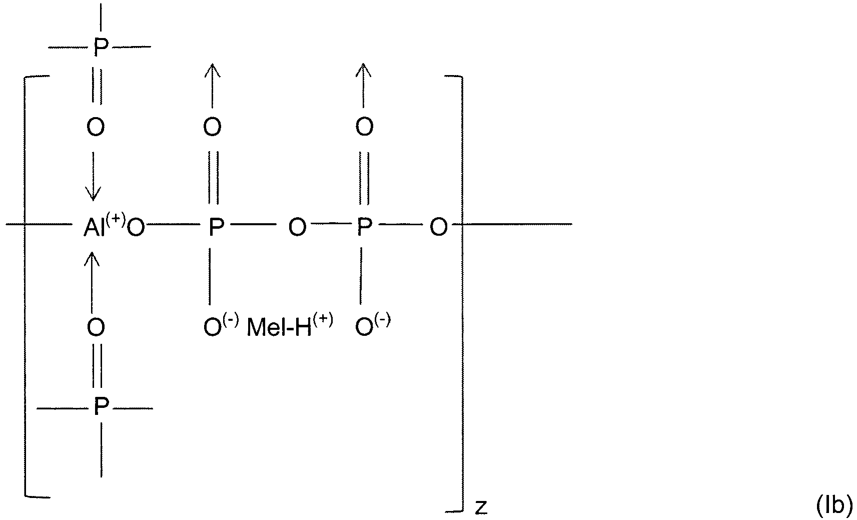

Bevorzugte Verbindungen sind beispielsweise:
(A- H)⁽⁺⁾ [MtPO₄]⁽⁻⁾*pH₂O, wobei A Melamin, Guanidin oder Aminoguanidin ist, Mt Mg oder Zn ist und p 0 bis 4 ist;
(A - H)⁽⁺⁾[AlP₂O₇]⁽⁻⁾, wobei A Melamin, Guanidin oder Aminoguanidin ist;
(A- H)⁽⁺⁾ [MtPO₄]⁽⁻⁾*pH₂O, wobei A Melam, Acetoguanamin oder Benzoguanamin ist, Mt Mg oder Zn und p 0 bis 4 ist;
(A - H)⁽⁺⁾[AlP₂O₇]⁽⁻⁾*pH₂O, wobei A Melam, Acetoguanamin oder Benzoguanamin und p 0 bis 4 ist;
(A- H)⁽⁺⁾ [MtPO₄]⁽⁻⁾*pH₂O, wobei A Melamin, Guanidin oder Aminoguanidin ist, Mt Sn, TiO und ZrO und p 0 bis 4 ist;
(A - H)⁽⁺⁾[AlP₂O₇]⁽⁻⁾*pH₂O, wobei A Melamin, Guanidin oder Aminoguanidin ist, Mt Ce, Sb oder Bi und p 0 bis 4 ist.

Es konnte überraschend gezeigt werden, dass die Azin-Metallphosphate der vorliegenden Erfindung thermisch stabiler als herkömmliche in Flammschutzmitteln verwendete Verbindungen sind. Darüber hinaus sind sie in einem Einstufenprozess einfach herstellbar. Das Verfahren zu ihrer Herstellung ist dabei energiesparend und ökonomisch, da die gesonderte Herstellung von Metall-Dihydrogenphosphaten entfällt. Dies ist insbesondere von Vorteil, da Metall-Dihydrogenphosphate in der Mehrzahl der Fälle nur in der Wärme lagerstabil sind und bei Raumtemperatur nach einer gewissen Zeit zu Niederschlagsbildung neigen. Diese Niederschläge sind jedoch nur schwer wieder zu solubilisieren.

### Azin-Metallphosphathaltige Zusammensetzungen

Ferner wurde unerwartet gefunden, dass durch Bereitstellung von Zusammensetzungen durch Zugabe von Synergisten oder Co-Komponenten das Wirkungsprofil der Azin-Metallphosphate in Bezug auf Flammschutzwirkung und Intumeszenzverhalten weiter optimiert werden kann. Diese weiteren Komponenten können metallhaltig oder metallfrei sein.

Die vorliegende Erfindung betrifft somit ferner die Verwendung einer Zusammensetzung, welche die zuvor beschriebenen Azin-Metallphosphate (Komponente (i)), eine weitere, von der Komponente (i) verschiedene metallhaltige Komponente (ii) und gegebenenfalls eine metallfreie Komponente (iii) umfasst, wie in Anspruch 8 angegeben.

Die zusätzliche metallhaltige Komponente (ii) kann insbesondere Metallhydroxid, Metallphosphat, Metallpyrophosphat, Hydrotalcit, Hydrokalumit, kationisch- oder anionisch-modifizierter Organoclay, Stannatsalz oder Molybdatsalz, Metallborat oder Metallphosphinat der Formeln (V) oder (VI) oder Metallphosphonat der Formel (VII) umfassen, 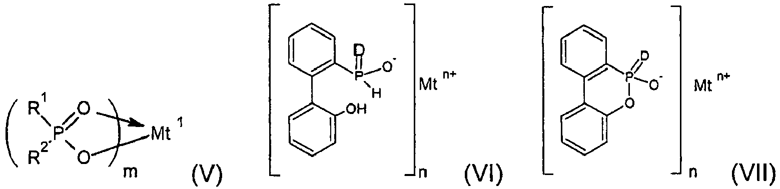 wobei R¹ und R² unabhängig voneinander Wasserstoff, lineares oder verzweigtes C₁-C₆-Alkyl oder Phenyl sind; Mt¹ Ca, Mg, Zn oder Al ist, m = 2 oder 3 ist und Mt Ca, Mg, Zn, Al, Sn, Zr, TiO, ZrO, Ce, MoO, WO₂, VO, Mn, Bi oder Sb ist, D = O oder S ist und n 2 oder 3 ist.

Hydrotalcit und Hydrokalumit besitzen beispielsweise die Zusammensetzung Mg₆Al₂(OH)₁₆CO₃ und Ca₄Al₂(OH)₁₂CO₃. Unter Organoclays versteht der Fachmann organophilmodifizierte Tonmineralien (haupsächlich Montmorillonite) auf Basis von Kationenaustausch wie Triethanol-Talg-Ammonium-Montmorillonit und Triethanol-Talg-Ammonium-Hektorit, wie in Dr. G. Beyer; Konf. Fire Resistance in Plastics, 2007 beschrieben. Anionische Organoclays bedeuten organophil-modifizierte Hydrotalcite auf Basis von Anionenaustausch mit Alkalirosinaten, ungesättigten und gesättigten Fettsäuresalzen sowie langkettig alkylsubstituierten Sulfonaten und Sulfaten.

Metalloxide sind bevorzugt Diantimontrioxid, Diantimontetroxid, Diantimonpentoxid oder Zinkoxid.

Als Metallphosphat sind Metallpyrophosphate bevorzugt. Besonders bevorzugt sind Aluminium- und Zinkpyrophosphat sowie Zink- und Aluminiumtriphosphat ebenso wie Aluminium- und Zinkmetaphosphat sowie Aluminium- und Zinkorthophosphat.

Unter den kationisch- oder anionisch-modifizierten Organoclays sind die alkylsulfat-oder fettsäurecarboxylat- modifizierten Hydrotalcite oder langkettig quaternär-ammonium-modifizierte Tonmineralien besonders bevorzugt.

Bevorzugt sind bei den Metallhydroxiden Magnesiumhydroxid (Brucit), Aluminiumtrihydroxid (ATH, Gibbsit) oder Aluminiummonohydroxid (Boehmit) sowie Hydromagnesit und Hydrozinkit. Neben Gibbsit und Boehmit sind auch die anderen Modifikationen von Aluminiumhydroxiden, nämlich Bayerit, Nordstrandit und Diaspor anzuführen.

Weiterhin bevorzugt sind in Bezug auf Molybdatsalze oder Stannatsalze Ammoniumheptamolybdat, Ammoniumoctamolybdat, Zinkstannat oder Zinkhydroxystannat oder Mischungen davon. Diese wirken ferner als Rauchverminderer und weisen somit besonders vorteilhafte Eigenschaften in den Flammschutzmitteln der vorliegenden Erfindung auf.

Aus der Klasse der Metallborate sind Alkali-, Erdalkali- oder Zinkborat bevorzugt. Weiterhin anzuführen sind Aluminiumborat, Bariumborat, Calciumborat, Magnesiumborat, Manganborat, Melaminborat, Kaliumborat, Zinkborphosphat oder Mischungen davon.

Metallphosphinate sind bevorzugt Salze in denen Mt¹ ausgewählt ist aus Ca, Mg, Zn oder Al. Bevorzugte Metallphosphinate sind Phenylphosphinat Diethyl(methyl, ethyl)phosphinat, insbesondere in Verbindung mit den zuvor genannten Metallen.

Unter den Hypophosphiten sind das Mg-, Ca-, Zn- und Al-Salz besonders bevorzugt.

Bevorzugte Metallphosphinate (VI) und Metallphosphonate (VII) sind Salze mit Mt ausgewählt aus Ca, Mg, Zn oder Al. Besonders bevorzugt ist die Verwendung eines Metallphosphinates (VI), das aus 6H-Dibenz[c,e][1,2]oxaphosphorin-6-oxid [CAS-Nr.:35948-25-5) in Wasser ohne Verwendung von Alkalilauge hergestellt wird. Besonders bevorzugt ist auch die Verwendung von Metallphosphonaten (VII), die beispielsweise durch thermische Zyklisierung von Vorstufen (VI) zugänglich sind. Ganz besonders bevorzugt sind Zink- oder Aluminium-Phosphonate und Thiophosphonate (VII). Die (Thio)Phosphonate werden vorzugsweise aus den (Thio)Phosphonsäuren (CAS-Nr:36240-31-0 und CAS-Nr:62839-09-2) hergestellt. Sämtliche Phosphorvorstufen sind als Handelsprodukte erhältlich.

Die metallfreie (Co-)Komponente (Komponente (iii) der erfindungsgemäßen Zusammensetzung) umfasst insbesondere roten Phosphor, oligomere Phosphatester, oligomere Phosphonatester, zyklische Phosphonatester, Thiopyrophosphorsäureester, Melaminorthophosphat oder Melaminpyrophosphat, Di-Melaminphosphat, Melam(polyphosphat), Melem, Ammoniumpolyphosphat, Melamin-Phenylphosphonat sowie dessen Halbestersalz, wie in WO 2010/063623 beschrieben, Melamin-Benzolphosphinat, wie in WO 2010/057851 beschrieben, Hydroxyalkyl-Phosphinoxide, wie in WO 2009/034023 beschrieben, Tetrakishydroxymethylphosphoniumsalze und Phospholan(oxid)- bzw. Phosphol-Derivate sowie Bisphosphoramidate mit Piperazin als Brückenglied oder ein Phosphinatester, die Substanzklasse der NOR-HALS-Verbindungen (non-basic aminoether hindered amine light stabilizer) sowie Mischungen davon.

Bevorzugt als weitere zusätzliche Komponente sind Melaminpolyphosphat, Bis-Melamin-Zinkdiphosphat, Bis-Melamin-Magnesiumdiphosphat oder Bis-Melamin-Aluminiumtriphosphat.

Bevorzugt in Bezug auf oligomere Phosphatester sind Phosphatester der Formel (VIII) oder Formel (IX), 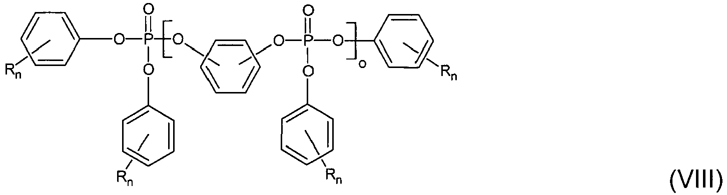 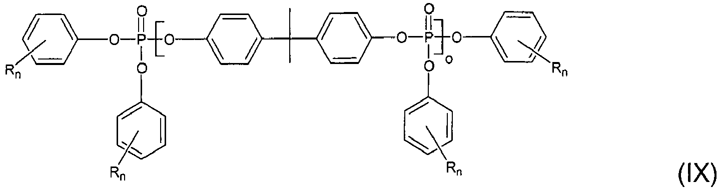 wobei jedes R unabhängig voneinander Wasserstoff, C₁-C₄-Alkyl oder Hydroxy ist, n = 1 bis 3 ist und o = 1 bis 10 ist. Besonders bevorzugt sind Oligomere mit Rₙ = H und Resorcin bzw. Hydrochinon als Bestandteil des Brückengliedes sowie Rₙ = H und Bisphenol-A oder Bisphenol-F als Bestandteil des Brückengliedes.

Bevorzugt sind oligomere Phosphonatester der Formel (X), 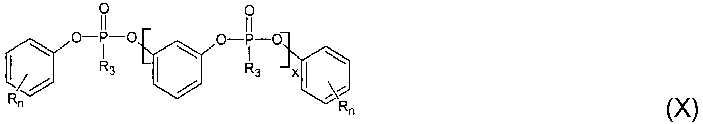 wobei R₃ Methyl oder Phenyl ist, x = 1 bis 20 ist, R jeweils unabhängig voneinander Wasserstoff, C₁-C₄-Alkyl oder Hydroxy ist, n = 1 bis 3 und o 1 bis 10 ist.
Besonders bevorzugt sind Oligomere mit Rₙ = H und Resorcin bzw. Hydrochinon als Bestandteil des Brückengliedes.

Weiterhin bevorzugt sind zyklische Phosphonatester der Formel (XI): 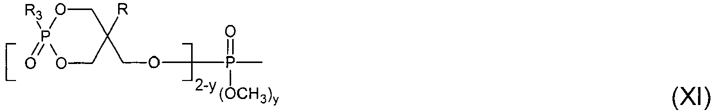 wobei R₃ Methyl oder Phenyl ist, R Wasserstoff, C₁-C₄-Alkyl ist und y 0 oder 2 ist. Besonders bevorzugt ist Bis[5-ethyl-2-methyl-1,3,2-dioxaphosphorinan-5-yl)methyl]methylphosphonat-P,P'-dioxid.

Ferner bevorzugt sind Thiopyrophosphorsäureester der Formel (XII) 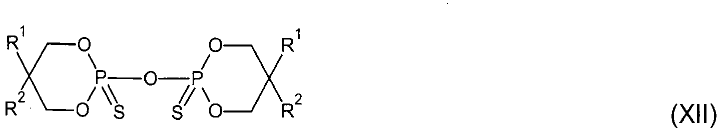 wobei jedes R¹ und R² unabhängig voneinander Wasserstoff, C₁-C₄-Alkyl ist Besonders bevorzugt ist 2,2'-Oxybis[5,5-dimethyl-1,3,2-dioxaphosphorinan]2,2'-disulfid.

Von den Hydroxyalkyl-Phosphinoxiden sind bevorzugt Isobutyl-bis-hydroxymethyl-Phosphinoxid sowie dessen Kombination mit Epoxyharzen, wie in WO-A 2009/034023 beschrieben.

Von den Tetrakis-hydroxyalkyl-Phosphoniumsalzen sind die Tetrakis-hydroxymethyl-Phosphoniumsalze besonders bevorzugt.

Von den Phospholan- bzw. Phosphol-Derivaten sind Dihydrophosphol(oxid)-Derivate und Phospholan (oxid)-derivate sowie deren Salze, wie in EP 1 024 166 beschrieben, besonders bevorzugt.

Von den Bisphosphoramidaten sind die Bis-di-ortho-xylylester mit Piperazin als Brückenglied besonders bevorzugt.

Ebenfalls besonders bevorzugt sind Phosphinatester, wie beispielsweise Benzolmonophenylesterderivate oder 9,10-Dihydro-9-oxa-10-phosphaphenanthren-10-oxid (6H-Dibenzo(c,e)(1,2)-oxaphosphorin-6-on)- Derivate wie in den folgenden Formeln dargestellt. 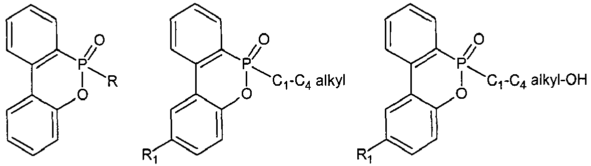 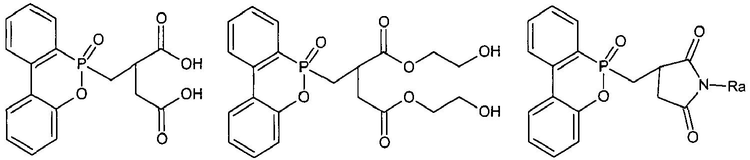 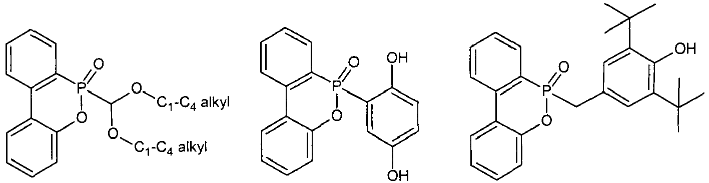 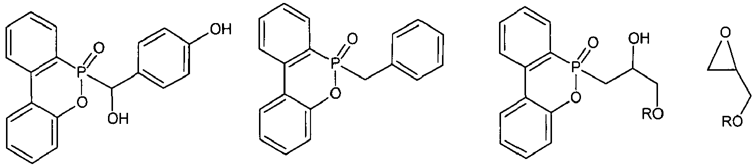 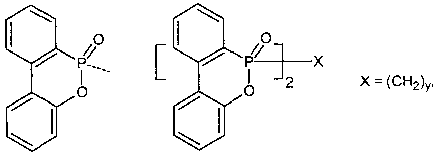 wobei y = 2 - 18 ist 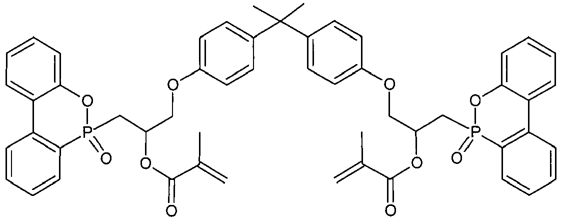 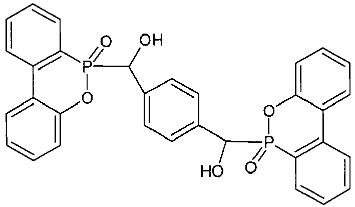 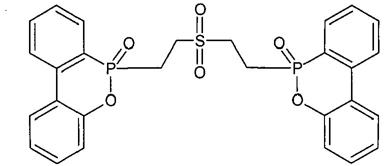 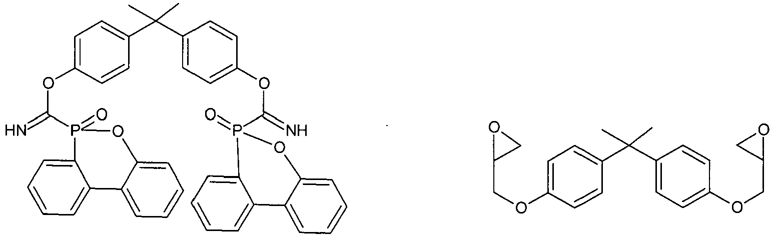 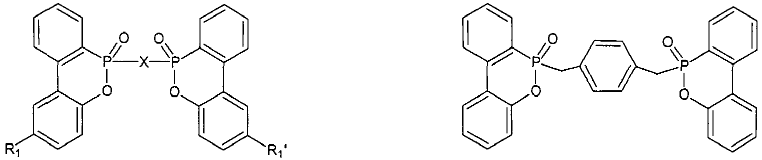 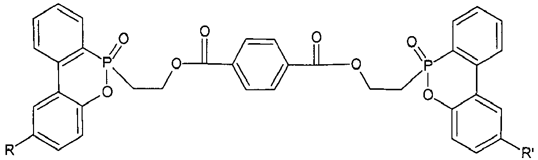 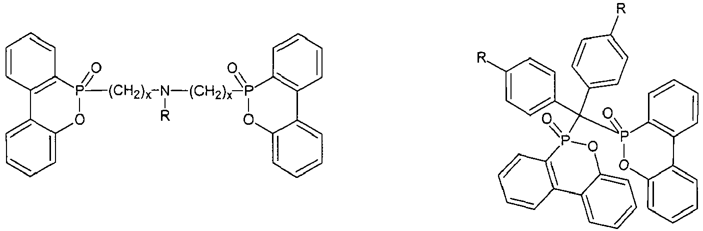 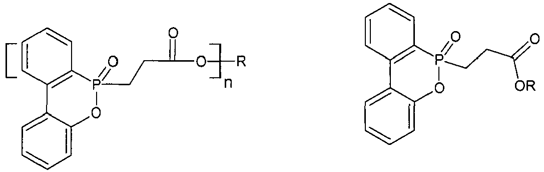 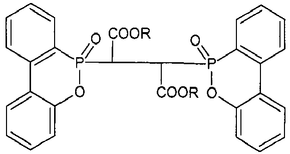 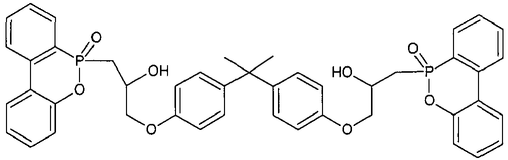 wobei R C₁ - C₄-Alkyl, n 1 bis 6 und x 1 bis 3 ist. Besonders bevorzugt sind Verbindungen der Formel (XIII), (XIV) oder (XV), wie im Folgenden dargestellt.

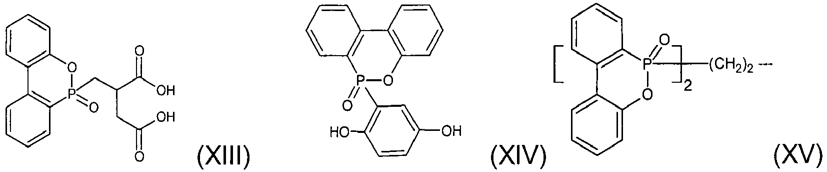

Bis-9,10-Dihydro-9-oxa-10-phosphaphenanthren-10-oxid (6H-Dibenz[c,e][1,2]oxa-phosphorin-6-oxid)-Verbindungen (Formel XV), sowie 10-Benzyl-9-oxa-10-phosphaphenanthren-10-oxid, CAS-No: 113504-81-7. Die Herstellung dieser Verbindungen ist in Russ. J. Org. Chem. 2004, 40(12), 1831-35 beschrieben. Weitere in der vorliegenden Erfindung geeignete 9,10-Dihydro-9-oxa-10-phosphaphenanthren-10-oxid (6H-Dibenz[c,e][1,2]oxa-phosphorin-6-oxid)-Derivate sind beschrieben in US 8101678 B2 und US 8236881 B2.

Anstelle von 9,10-Dihydro-9-oxa-10-phosphaphenanthren-10-oxid (6H-Dibenz[c,e][1,2]oxa-phosphorin-6-oxid) kann auch Dihydro-oxa-phospha-anthrazenoxid(on) verwendet werden. Eine Übersicht hierzu ist der WO-A 2008/119693 zu entnehmen.

Von den NOR-HALS-Verbindungen sind folgende Verbindungen bevorzugt: 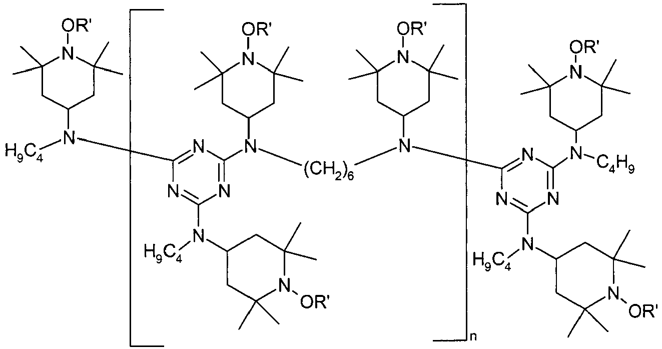 mit R' = CH₃, n-C₄H₉, oder c-C₆H₁₁ 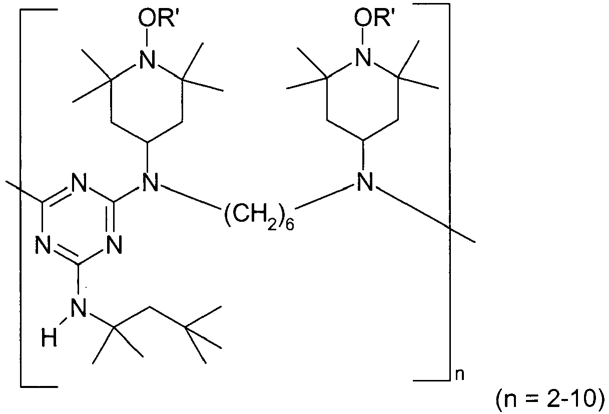 mit R' = CH₃, n-C₄H₉, oder c-C₆H₁₁ 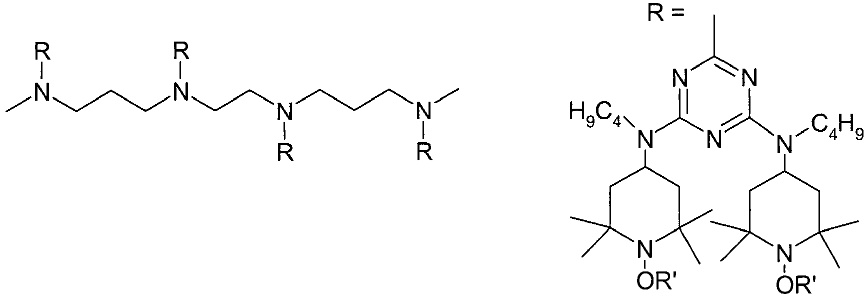 mit R' = CH₃, n-C₄H₉, oder c-C₆H₁₁ 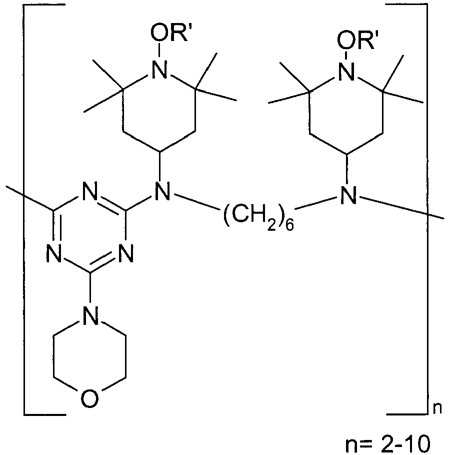 mit R' = CH₃, n-C₄H₉, oder c-C₆H₁₁ 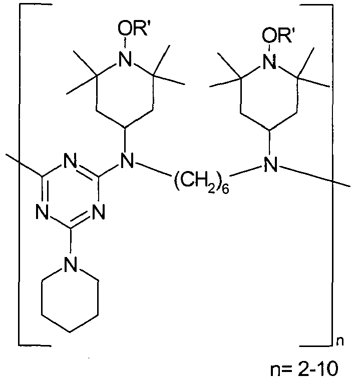 mit R' = CH₃, n-C₄H₉, oder c-C₆H₁₁
Ebenso bevorzugt sind zusätzlich Polyole, Aminouracile, POSS-Verbindungen, Trishydroxyethylisocyanurat, Melamincyanurat, Blähgraphit oder Mischungen davon. POSS-Verbindungen (polyhedral oligomeric silsesquioxanes) und deren Derivate werden näher beschrieben in POLYMER, Vol. 46, S. 7855-7866. Besonders bevorzugt sind hierbei POSS-Derivate auf Methylsiloxan-Basis.

Ferner können auch Tris-hydroxyethyl-isocyanurat-polyterephthalate sowie Triazinpolymere mit Piperazin-1,4-diyl-Brückengliedern und Morpholin-1-yl-Endgruppen in den Flammschutzmitteln der vorliegenden Erfindung enthalten sein.

Ferner können folgende Zusatzstoffen in den Flammschutzmitteln der vorliegenden Erfindung enthalten sein: Bis-Azinpentaerythritdiphosphatsalze, Hexa-aryloxytriphosphazene, Poly-aryloxy-phosphazene und Siloxane, beispielsweise der allgemeinen Form (R₂SiO)r oder (RSiO_{1,5})r.

Grundsätzlich können in den Zusammensetzungen der vorliegenden Erfindung auch Mischungen zweier oder mehrerer der zuvor beschriebenen Verbindungen enthalten sein.

Besonders bevorzugt sind Zweier-Kombinationen wie beispielsweise:
- MZP oder MAP₂ (Melamin-Zinkphosphat/Melamin-Aluminiumdiphosphat) und Mg(2'-Hydroxy[1,1'-Biphenyl-2-yl-2-phosphinat)₂ CAS-Nr: [165597-56-8], Zn(2'-Hydroxy[1,1'-Biphenyl-2-yl-2-phosphinat)₂ CAS-Nr: [139005-99-5],
   Al(2'-Hydroxy[1,1'-Biphenyl-2-yl-2-phosphinat)₃ CAS-Nr: [145826-41-1] gemäß Formel (VI);
   Mg(10-oxy-9,10-Dihydro-9-oxa-phosphaphenanthren-10-oxid-at)₂ CAS-Nr: [147025-23-8],
   Zn(10-oxy-9,10-Dihydro-9-oxa-phosphaphenanthren-10-oxid-at)₂ CAS-Nr: [69151-14-0],
   Al(10-oxy-9,10-Dihydro-9-oxa-phosphaphenanthren-10-oxid-at)₃ CAS-Nr: [121166-84-5].
   Ca(10-oxy-9,10-Dihydro-9-oxa-phosphaphenanthren-10-oxid-at)₂ CAS-Nr: [144722-45-2], gemäß Formel (VII);
- M₂ZP₂ oder M₂AP₃ (Dimelamin-Zinkdiphosphat/Dimelamin-Aluminiumtriphosphat) und
   Mg(2'-Hydroxy[1,1'-Biphenyl-2-yl-2-phosphinat)₂,
   Zn(2'-Hydroxy[1,1'-Biphenyl-2-yl-2-phosphinat)₂,
   Al(2'-Hydroxy[1,1'-Biphenyl-2-yl-2-phosphinat)₃,
   Mg(10-oxy-9,10-Dihydro-9-oxa-phosphaphenanthren-10-oxid-at)₂,
   Zn(10-oxy-9,10-Dihydro-9-oxa-phosphaphenanthren-10-oxid-at)₂ oder
   Al(10-oxy-9,10-Dihydro-9-oxa-phosphaphenanthren-10-oxid-at)₃;

Ganz Besonders bevorzugt sind Dreier-Kombination wie beispielsweise:
- MZP oder MAP₂ (Melamin-Zinkphosphat/Melamin-Aluminiumdiphosphat) und
   Mg(2'-Hydroxy[1,1'-Biphenyl-2-yl-2-phosphinat)₂,
   Zn(2'-Hydroxy[1,1'-Biphenyl-2-yl-2-phosphinat)₂,
   Al(2'-Hydroxy[1,1'-Biphenyl-2-yl-2-phosphinat)₃,
   Mg(10-oxy-9,10-Dihydro-9-oxa-phosphaphenanthren-10-oxid-at)₂,
   Zn(10-oxy-9,10-Dihydro-9-oxa-phosphaphenanthren-10-oxid-at)₂ oder
   Al(10-oxy-9,10-Dihydro-9-oxa-phosphaphenanthren-10-oxid-at)₃; und Zinkborat.
- M₂ZP₂ oder M₂AP₃ (Dimelamin-Zinkdiphosphat/Dimelamin-Aluminiumtriphosphat) und
   Mg(2'-Hydroxy[1,1'-Biphenyl-2-yl-2-phosphinat)₂,
   Zn(2'-Hydroxy[1,1'-Biphenyl-2-yl-2-phosphinat)₂,
   Al(2'-Hydroxy[1,1'-Biphenyl-2-yl-2-phosphinat)₃,
   Mg(10-oxy-9,10-Dihydro-9-oxa-phosphaphenanthren-10-oxid-at)₂,
   Zn(10-oxy-9,10-Dihydro-9-oxa-phosphaphenanthren-10-oxid-at)₂ oder
   Al(10-oxy-9,10-Dihydro-9-oxa-phosphaphenanthren-10-oxid-at)₃; und Zinkborat.
- MZP oder MAP₂ (Melamin-Zinkphosphat/Melamin-Aluminiumdiphosphat) und
   Mg(2'-Hydroxy[1,1'-Biphenyl-2-yl-2-phosphinat)₂,
   Zn(2'-Hydroxy[1,1'-Biphenyl-2-yl-2-phosphinat)₂,
   Al(2'-Hydroxy[1,1'-Biphenyl-2-yl-2-phosphinat)₃,
   Mg(10-oxy-9,10-Dihydro-9-oxa-phosphaphenanthren-10-oxid-at)₂,
   Zn(10-oxy-9,10-Dihydro-9-oxa-phosphaphenanthren-10-oxid-at)₂ oder
   Al(10-oxy-9,10-Dihydro-9-oxa-phosphaphenanthren-10-oxid-at)₃;
   und Zinkstannat.
- M₂ZP₂ oder M₂AP₃ (Dimelamin-Zinkdiphosphat/Dimelamin-Aluminiumtriphosphat) und
   Mg(2'-Hydroxy[1,1'-Biphenyl-2-yl-2-phosphinat)₂,
   Zn(2'-Hydroxy[1,1'-Biphenyl-2-yl-2-phosphinat)₂,
   Al(2'-Hydroxy[1,1'-Biphenyl-2-yl-2-phosphinat)₃,
   Mg(10-oxy-9,10-Dihydro-9-oxa-phosphaphenanthren-10-oxid-aₜ)2,
   Zn(10-oxy-9,10-Dihydro-9-oxa-phosphaphenanthren-10-oxid-at)₂ oder
   Al(10-oxy-9,10-Dihydro-9-oxa-phosphaphenanthren-10-oxid-at)₃; und Zinkstannat.
- MZP oder MAP₂ (Melamin-Zinkphosphat/Melamin-Aluminiumdiphosphat) und
   Mg(2'-Hydroxy[1,1'-Biphenyl-2-yl-2-phosphinat)₂,
   Zn(2'-Hydroxy[1,1'-Biphenyl-2-yl-2-phosphinat)₂,
   Al(2'-Hydroxy[1,1'-Biphenyl-2-yl-2-phosphinat)₃,
   Mg(10-oxy-9,10-Dihydro-9-oxa-phosphaphenanthren-10-oxid-at)₂,
   Zn(10-oxy-9,10-Dihydro-9-oxa-phosphaphenanthren-10-oxid-at)₂ oder
   Al(10-oxy-9,10-Dihydro-9-oxa-phosphaphenanthren-10-oxid-at)₃;
   und Boehmit.
- M₂ZP₂ oder M₂AP₃ (Dimelamin-Zinkdiphosphat/Dimelamin-Aluminiumtriphosphat) und
   Mg(2'-Hydroxy[1,1'-Biphenyl-2-yl-2-phosphinat)₂,
   Zn(2'-Hydroxy[1,1'-Biphenyl-2-yl-2-phosphinat)₂,
   Al(2'-Hydroxy[1,1'-Biphenyl-2-yl-2-phosphinat)₃,
- Mg(10-oxy-9,10-Dihydro-9-oxa-phosphaphenanthren-10-oxid-at)₂,
   Zn(10-oxy-9,10-Dihydro-9-oxa-phosphaphenanthren-10-oxid-at)₃ oder
   Al(10-oxy-9,10-Dihydro-9-oxa-phosphaphenanthren-10-oxid-at)₃; und Boehmit.
- MZP + MPP und
   Mg(2'-Hydroxy[1,1'-Biphenyl-2-yl-2-phosphinat)₂,
   Zn(2'-Hydroxy[1,1'-Biphenyl-2-yl-2-phosphinat)₂,
   Al(2'-Hydroxy[1,1'-Biphenyl-2-yl-2-phosphinat)₃,
   Mg(10-oxy-9,10-Dihydro-9-oxa-phosphaphenanthren-10-oxid-at)₂,
   Zn(10-oxy-9,10-Dihydro-9-oxa-phosphaphenanthren-10-oxid-at)₂ oder
   Al(10-oxy-9,10-Dihydro-9-oxa-phosphaphenanthren-10-oxid-at)₃.
- MAP₂ + MPP und
   Mg(2'-Hydroxy[1,1'-Biphenyl-2-yl-2-phosphinat)₂,
   Zn(2'-Hydroxy[1,1'-Biphenyl-2-yl-2-phosphinat)₂,
   Al(2'-Hydroxy[1,1'-Biphenyl-2-yl-2-phosphinat)₃,
   Mg(10-oxy-9,10-Dihydro-9-oxa-phosphaphenanthren-10-oxid-at)₂,
   Zn(10-oxy-9,10-Dihydro-9-oxa-phosphaphenanthren-10-oxid-at)₂ oder
   Al(10-oxy-9,10-Dihydro-9-oxa-phosphaphenanthren-10-oxid-at)₃.

### Verwendung des erfindungsgemäßen Azin-Metallphosphats

Eine besondere Ausführungsform der Erfindung betrifft die Verwendung des erfindungsgemäßen Azin-Metallphosphats in einem Polymer oder einer Polymermischung als Flammschutzmittel.

Die erfindungsgemäß erhaltenen Flammschutzmittel können einem weiteren Verfahren zur Herstellung von flammgeschützten Polymerformmassen unterworfen werden, wobei die Flammschutzmittel mit dem Polymergranulat und evtl. Additiven in einem Compoundieraggregat bei höheren Temperaturen in der Polymerschmelze homogenisiert werden und anschließend der homogenisierte Polymerstrang abgezogen, gekühlt und portioniert wird. Das erhaltene Granulat wird z.B. bei 90 °C im Umluftofen getrocknet.

Bevorzugt stammt das Compoundieraggregat aus der Gruppe der Einwellenextruder, Mehrzonenschnecken oder Doppelschneckenextruder. Geeignete Compoundieraggregate sind Einwellenextruder bzw. Einschneckenextruder z.B. der Fa. Berstorff GmbH, Hannover und oder der Fa. Leistritz, Nürnberg, Mehrzonenschnecken-Extruder mit Dreizonenschnecken und/oder Kurzkompresionsschnecken, Ko-Kneader z.B. Fa. Coperion Buss Compounding Systems, CH-Pratteln, z.B. MDK/E46-11 D und/oder Laborkneter (MDK 46 der Fa. Buss, Schweiz mit L = 11 D); Doppelschneckenextruder z.B. der Fa. Coperion Werner Pfleiderer GmbH & Co. KG, Stuttgart (ZSK 25, ZSk 30, ZSK 40, ZSK 58, ZSK MEGAcompounder 40, 50, 58, 70, 92, 119, 177, 250, 320, 350, 380) und/oder der Fa. Berstorff GmbH, Hannover, Leistritz Extrusionstechnik GmbH, Nürnberg; Ring-Extruder z.B. der Fa. 3+Extruder GmbH, Laufen mit einem Ring von drei bis zwölf kleinen Schnecken, die um einem statischen Kern rotieren und/oder Planetwalzenextruder z.B. der Fa. Entex, Bochum und/oder Entgasungsextruder und/oder Kaskadenextruder und/oder Maillefer-Schnecken; Compounder mit gegenläufiger Doppelschnecke z.B. Complex 37- bzw. -70-Typen der Fa. Krauss-Maffei Berstorff.

Das Polymer ist typischerweise ein Thermoplast, der vorzugsweise ausgewählt ist aus der Gruppe, bestehend aus Polyamid, Polycarbonat, Polyolefin, Polystyrol, Polyester, Polyvinylchlorid, Polyvinylalkohol, ABS und Polyurethan, oder ein Duroplast ist, der vorzugsweise ausgewählt ist aus der Gruppe, bestehend aus Epoxidharz (mit Härter), Phenolharz und Melaminharz.

Es können auch Mischungen von zwei oder mehreren Polymeren, insbesondere Thermo- und/oder Duroplasten, in denen das erfindungsgemäße Azin-Metallphosphat als Flammschutzmittel eingesetzt wird, verwendet werden.

Beispiele für solche Polymere sind:
- Polymere von Mono- und Diolefinen, z.B. Polypropylen, Polyisobutylen, Polybuten-1, Poly-4-methylpenten-1, Polyvinylcyclohexan, Polyisopren oder Polybutadien und Polymerisate von Cycloolefinen, z.B. von Cyclopenten oder Norbornen und Polyethylen (auch vernetzt), z.B. High Density Polyethylen (HDPE) oder High Molecular Weight (HDPE-HMW), High Density Polyethylen mit Ultra-High Molecular Weight (HDPE-UHMW), Medium Density Polyethylen (MDPE), Low Density Polyethylen (LDPE) und Linear Low Density Polyethylen (LLDPE), (VLDPE) und (ULDPE) sowie Copolymere von Ethylen und Vinylacetat (EVA);
- Polystyrole, Poly(p-methylstyrol), Poly(α-methylstyrol);
- Copolymere sowie Propfcopolymere von Polybutadien-Styrol oder Polybutadien und (Meth)Acrylnitril wie z.B. ABS und MBS;
- Halogenhaltige Polymere, wie z.B. Polychloropren, Polyvinylchlorid (PVC); Polyvinylidenchlorid (PVDC), Copolymere von Vinylchlorid/Vinylidenchlorid, Vinylchlorid/Vinylacetat oder Vinylchlorid/Vinylacetat;
- Poly(meth)acrylate, Polymethylmethacrylate (PMMA), Polyacrylamid und Polyacrylnitril (PAN);
- Polymere von ungesättigten Alkoholen und Aminen oder ihren Azylderivaten bzw. Azetalen, wie z.B. Polyvinylalkohol (PVA), Polyvinylacetate, -stearate, - benzoate oder-maleate, Polyvinylbutyral, Polyallylphthalate und Polyallylmelamine;
- Homo- und Copolymere von cyclischen Ethern, wie Polyalkylenglykole, Polyethylenoxide, Polypropylenoxide und deren Copolymere mit Bisglycidylethern;
- Polyacetale, wie beispielsweise Polyoxymethylene (POM) sowie Polyurethan und Acrylat-modifizierte Polyazetale;
- Polyphenylenoxide und -sulfide und deren Gemische mit Styrolpolymeren oder Polyamiden;
- Polyamide und Copolyamide hergeleitet von Diaminen und Dicarbonsäuren und/oder von Aminocarbonsäuren oder den entsprechenden Laktamen, wie z.B. Polyamid 4, Polyamid 6, Polyamid 6/6, 6/10, 6/9, 6/12, 12/12, Polyamid 11, Polyamid 12, aromatische Polyamide, hergeleitet vom m-Xylylendiamin und Adipinsäure und Copolyamide modifiziert mit EPDM oder ABS. Beispiele von Polyamiden und Copolyamiden sind hergeleitet von ε-Kaprolaktam, Adipinsäure, Sebacinsäure, Dodekansäure, Isophthalsäure, Terephthalsäure, Hexamethylen-diamin, Tetramethylendiamin, 2-Methyl-pentamethylendiamin, 2,2,4-Trimethyl-hexamethylendiamin, 2,4,4-Trimethylhexamethylendiamin, m-Xylylendiamin oder Bis(3-Methyl-4-aminozyklohexyl)methan;
- Polyharnstoffe, Polyimide, Polyamidimide, Polyetherimide, Polyesterimide, Polyhydantoine und Polybenzimidazole.
- Polyester, hergeleitet von Dicarbonsäuren und Dialkoholen und/oder Hydroxycarbonsäuren oder den entsprechenden Laktonen, wie z.B. Polyethylenterephthalat, Polypropylenterephthalat, Polybutylenterephthalat, Poly-1,4-dimethylzyklohexanterephthalat, Polyalkylennaphthalat (PAN) und Polyhydroxybenzoate, Polymilchsäureester und Polyglykolsäureester;
- Polycarbonate und Polyestercarbonate;
- Polyketone;
- Mischungen bzw. Legierungen von o.g. Polymeren z.B. PP/EPDM, PA/EPDM oder ABS, PVC/EVA, PVC/ABS, PBC/MBS, PC/ABS, PBTP/ABS, PC/AS, PC/PBT, PVC/CPE, PVC/Acrylat, POM/thermoplastisches PUR, PC/thermoplastisches PUR, POM/Acrylat, POM/MBS, PPO/HIPS, PPO/PA6.6 und Copolymere, PA/HDPE, PA/PP, PA/PPO, PBT/PC/ABS oder PBT/PET/PC, sowie TPE-O, TPE-S und TPE-E;
- Duroplaste wie PF, MF oder UF oder Mischungen davon;
- Epoxidharze - Thermoplaste und Duroplaste;
- Phenolharze;
- Wood-Plastic-Composites (WPC) sowie Polymere auf PLA-, PHB- und Stärke-Basis.

Die Konzentration der erfindungsgemäß verwendeten Flammschutzmittelzubereitungen, bestehend aus dem Azin-Metallphosphat (Komponente (i)) und der zusätzlichen metallhaltigen Komponente (ii) und gegebenenfalls der metallfreien Komponente (iii) beträgt in einem Polymer oder einer Polymermischung bevorzugt 0,1 bis 60 Gew.-%, bezogen auf Polymer oder die Polymermischung. Das Komponentenverhältnis in der Zusammensetzung, bestehend aus Azin-Metallphosphat (i) zu den Co-Komponenten (ii) und gegebenenfalls (iii), liegt bevorzugt im Bereich von 1:1 bis 1:4

Das erhaltene Polymermaterial kann weitere Füllstoffe enthalten, die bevorzugt ausgewählt sind aus der Gruppe, bestehend aus Metallhydroxiden und/oder Metalloxiden, vorzugsweise Erdalkalimetallhydroxiden, beispielsweise Magnesiumhydroxid und Aluminiumhydroxid, Silikaten, vorzugsweise Schichtsilikaten wie Bentonit, Kaolinit, Muskovit, Pyrophyllit, Markasit und Talk, oder anderen Mineralien, wie Wollastonit, Siliziumdioxid, wie Quarz, Glimmer, Feldspat, sowie Titandioxid, Erdalkalimetallsilikate und Alkalimetallsilikate, Carbonate, vorzugsweise Calciumcarbonat, sowie Talk, Ton, Glimmer, Kieselerde, Calciumsulfat, Bariumsulfat, Pyrit, Glasfasern, Glaspartikeln, Glasperlen und Glaskugeln, Holzmehl, Cellulosepulver, Ruß, Graphit, Kreide und Pigmenten.

Diese Füllstoffe können dem Polymermaterial weitere gewünschte Eigenschaften verleihen. Insbesondere kann z.B. durch eine Verstärkung mit Glasfasern die mechanische Stabilität erhöht werden oder durch Zugabe von Farbstoffen der Kunststoff eingefärbt werden.

Die Polymermaterialien können weitere Zusatzstoffe, wie Antioxidantien, Lichtstabilisatoren, Prozesshilfsmittel, Nukleierungsmittel, Antistatika, Gleitmittel, wie Calcium- und Zinkstearat, Viskositätsverbesserer, Impact Modifier und insbesondere Kompatibilisatoren und Dispergierungsmittel, enthalten.

Außerdem können dem Polymer zusätzlich zu dem erfindungsgemäß erhaltenen Azin-Metallphosphat Schaumbildner zugesetzt werden. Schaumbildner sind bevorzugt Melamin, Melaminformaldehydharze, Harnstoffderivate, wie Harnstoff, Thioharnstoff, Guanamine, Benzoguanamin, Azetoguanamin und Succinylguanamin, Dizyandiamid, Guanidin und Guanidinsulfamat sowie andere Guanidinsalze bzw. Allantoine und Glykolurile.

Darüber hinaus kann ein Polymer, welches das erfindungsgemäße Azin-Metallphosphat enthält, auch Antidripping-Mittel, insbesondere auf Polytetrafluoroethylenbasis, enthalten. Die Konzentration solcher Antidrippingmittel beträgt vorzugsweise 0,01 bis 15 Gew.-%, bezogen auf das zu verarbeitende Polymer.

### Verfahren zur Herstellung erfindungsgemäßer Azin-Metallphosphate

Die Erfindung betrifft ein Verfahren zur Herstellung von Azin-Metallphosphaten der allgemeinen Formel [I],

[(A - H)⁽⁺⁾ [M^{m+} (PO₄)ₓ⁽³⁻⁾ (P₂O₇)_{y}⁽⁴⁻⁾]⁽⁻⁾*pH₂O]_{z} [I]

wobei (A - H)⁽⁺⁾ ausgewählt ist aus (Melamin-H)⁺ der Formel (I-H), (Melam-H)⁺ der Formel (II-H), [(Aceto)Benzoguanamin-H]⁺ der Formel (III-H), wobei R Methyl oder Phenyl, oder [(Amino)Guanidin-H)⁺ der Formel (IV H) ist, und R 'Wasserstoff oder Amino ist, 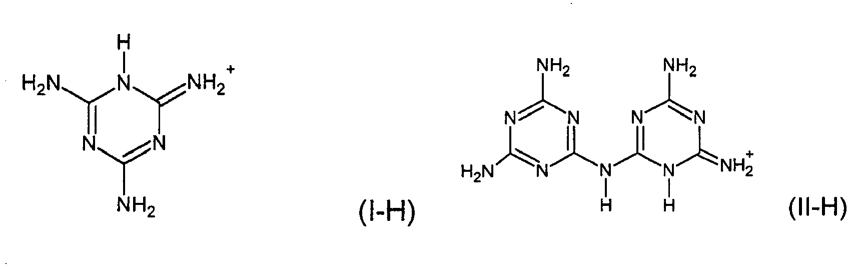 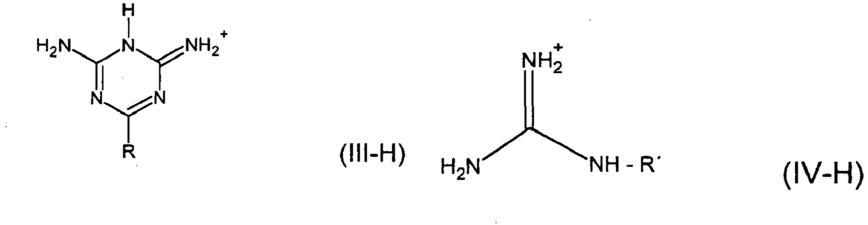 M = Cu, Mg, Ca, Zn, Mn, Fe, Co, Ni, TiO, ZrO, VO, B, Si, AI, Sb, La, Ti, Zr, Ce, Bi oder Sn ist,
m = 2 oder 3 ist,
x und y unabhängig voneinander 0 oder 1 sind,
p eine ganze Zahl von 0 bis 4 ist und
z eine ganze Zahl > 5 ist,
wobei gilt, dass 1 + m = 3x + 4y ist,
durch Umsetzen eines Azinedukts (A) mit einem Metalloxidedukt (B) und Orthophosphorsäure (C),
wobei das Azinedukt (A) ausgewählt ist aus Melamin der Formel (I-H), Melam der Formel (II-H), Guanamin der Formel (III-H) und Guanidin(bi)karbonat der Formel (IV-H), und das Metalloxidedukt (B) ausgewählt ist aus Metalloxiden, Metallhydroxiden und/oder Metallkarbonaten.

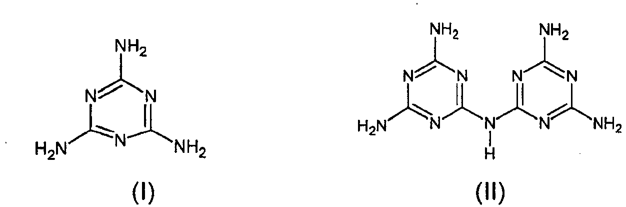

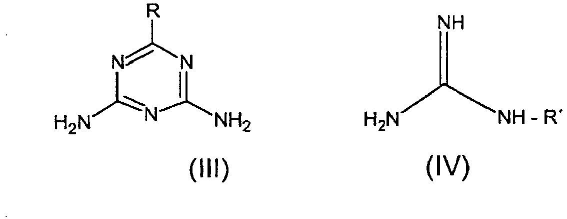

Bevorzugte Azin-Edukte sind Melamin, Guanamin und Melam. Bevorzugte Metalloxide sind ausgewählt aus MgO. ZnO. Al₂O₃ und SnO, ZrO₂, bevorzugte Metallhydroxide sind ausgewählt aus Mg(OH)₂, Zn(OH)₂, Al(OH)₃, Ce(OH)₃ und Bi(OH)₃ und (basische) Metallkarbonate sind bevorzugt ausgewählt aus CaCO₃, MgCO₃, basischem Magnesiumkarbonat (Hydromagnesit), basischem Zinkkarbonat und basischem Zirkonkarbonat. Besonders bevorzugt sind Mg(OH)₂, ZnO, Al(OH)₃ und basisches Zinkkarbonat. Grundsätzlich können als Azinedukts (A) und/oder als Metalloxidedukt (B) auch Mischungen aus zwei oder mehreren der zuvor genannten Verbindungen verwendet werden.

Das Verfahren umfasst üblicherweise die folgenden Schritte:
(a) Vorlage einer wässrigen Suspension aus Azinkomponente (A) und Metalloxidedukt (B) (d.h. Metall(hydr)oxid oder (basischem) Metallkarbonat),
(b) Zudosierung von Orthophosphorsäure,
(c) Erhitzen auf bevorzugt 60-80 °C,
(d) Abtrennen des Produktes sowie
(e) gegebenenfalls Trocknung zur Gewichtskonstanz und/oder Temperung bei typischerweise 250 - 300 °C.

Bevorzugt umfasst das Verfahren die Umsetzung der Komponenten (A-1 bis A-4):(B):(C) im molaren Verhältnis (1 bis 3):(1):(1 bis 3), wodurch insbesondere gewährleistet wird, dass sich *in-situ* zusätzliche Melamin- oder (Amino)Guanidin-Phosphate bilden.

Besonders bevorzugt kann an Schritt (a) ein Granulierverfahren anschließen. Dieses kann bevorzugt als Sprühagglomerierung entweder im Sprühtrockner, Sprühgranulator (Topspray oder Bottomspray, Gegenstromverfahren), Wirbelschichtgranulator oder in einem Schaufelmischer bzw. Horizontaltrockner erfolgen, wobei das eingebrachte Wasser entfernt wird, bis dass die gewünschte Restfeuchte erhalten wird. Die Granulierung kann durch Sprühtrocknung einer wässrigen Suspension eines Azin-Metallphosphates der Formel (I) bei üblicherweise 70 - 80 °C stattfinden oder alternativ als Sprühgranulierung ausgehend von einer Eduktmischung aus Komponenten (A) und (B) als Fließbett und Aufsprühen von Komponente (C) auf das Fließbett und anschließende Trocknung erhalten werden. Die Fließbett-Temperatur wird dabei konstant zwischen 70 - 80 °C gehalten, wobei die Granulate gleichzeitig abtrocknen und ein rieselfähiges, nichtstaubendes Granulat entsteht. Der Restwassergehalt liegt bei ca. 0,5 - 1%.

Die Temperung des Reaktionsproduktes erfolgt typischerweise bei 220 bis 350 °C, bevorzugt bei 250 bis 300 °C.

### Beispiele

Die folgenden Beispiele dienen der weiteren Erläuterung der Erfindung, wobei die Verbindungen der Beispiele 1 bis 6 das erfindungsgemäße Verfahren beschreiben und die Beispiele 1 bis 4 ferner neue Verbindungen beschreiben. Beispiel 7 ist ein Vergleichsbeispiel. Beispiel 8 beschreibt die Verwendung der erfindungsgemäßen Verbindungen als Flammschutzmittel.

### Beispiel 1: Synthese von Melamin-Magnesiumphosphat-Dihydrat (MMP) C₃H₇N₆O₄PMg_{*} 2H₂O (MW:282,5)

127,4 g (1,01 Mol) Melamin und 58,3 g (1,0 Mol) Magnesiumhydroxid werden in 1,5 l Wasser unter Rühren suspendiert. Zu dieser Suspension tropft man unter Rühren 115,3g (1,0 Mol) Orthophosphorsäure (85%ig) als verdünnte wässrige Lösung zu. Nach 1 stündigem Rühren bei 60 °C bildet sich ein voluminöser Niederschlag. Anschließend wird noch 60 Min. nachgerührt, auf Raumtemperatur abgekühlt, der entstandene weiße Niederschlag abgesaugt, mit Wasser nachgewaschen und bei 120 °C gewichtskonstant getrocknet.
Ausbeute: 253,0 g entsprechend 90% d.Th.

### Elementaranalyse:

gefunden: C: 12,70%; H: 3,67%; N: 29,69%; Mg: 8,47%; P: 10,87%
berechnet: C: (12,80%); H: (3,90%); N: (29,80%); Mg: (8,60%); P: (11,0%)

### Beispiel 2: Synthese von Melamin-Zinkphosphat-Dihydrat (MZP) C₃H₇N₆O₄PZn_{*} 2H₂O (MW = 323,5)

2547 g (20,2Mol) Melamin und 1628 g (20,0 Mol) Zinkoxid werden in 20 I Wasser unter Rühren suspendiert. Zu dieser Suspension tropft man unter Rühren 2306g (20,0 Mol) Orthophosphorsäure (85%ig) als verdünnte wässrige Lösung zu. Nach 1 stündigem Rühren bei 60 °C bildet sich ein voluminöser Niederschlag.

Anschließend wird noch 60 Min. nachgerührt, auf Raumtemperatur abgekühlt, der entstandene weiße Niederschlag abgesaugt, mit Wasser nachgewaschen und bei 120 °C gewichtskonstant getrocknet (Produkt 2-I).
Ausbeute: 6042,0g entsprechend 93,4% d.Th.

### Elementaranalyse:

gefunden: C: 11,6%; H: 2,83%; N: 27,20%; Zn: 19,83%; P: 9,45%
berechnet: C: (11,1%); H: (3,4%); N: (26,0%); Zn: (20,2%); P: (9,6%)

Das so erhaltene Produkt 2-I wurde 4h bei 290 °C getempert (Produkt 2-II) Gew.-Verlust: 10,4%. C₃H₇N₆O₄PZn (Mol.Gew.: 287,5).

### Elementaranalyse:

gefunden: C: 12,37%; H: 2,05% ; N: 27,48%; Zn: 21,35%; P: 10,28%
berechnet: C: (12,53%); H:(2,45%); N: (29,23%); Zn: (22,74%); P: (10,77%)

### Beispiel 3: Synthese von Guanidin-Magnesiumphosphat-Hemihydrat (GMP) CH₆N₃O₄PMg_{*} 0,5H₂O (MW = 188,4)

91,0 g (0,505 Mol) Bisguanidiniumkarbonat und 58,3 g (1,0 Mol) Magnesiumhydroxid werden in 1,5 I Wasser unter Rühren suspendiert. Zu dieser Suspension tropft man unter Rühren 115,3g (1,0 Mol) Orthophosphorsäure (85%ig) als verdünnte wässrige Lösung zu. Nach 1 stündigem Rühren bei 35 °C bildet sich ein weißer Niederschlag. Anschließend wird noch 60 Min. nachgerührt, auf Raumtemperatur abgekühlt, der entstandene weiße Niederschlag abgesaugt, mit Wasser nachgewaschen und bei 120 °C gewichtskonstant getrocknet.
Ausbeute:109,1g entsprechend 58% d.Th.

### Beispiel 4: Synthese von Guanidin-Zinkphosphat (GZP) CH₆N₃O₄PZn (MW =220,4)

91,0g (0,505Mol) Bisguanidiniumkarbonat und 81,4 g (1,0 Mol) Zinkoxid werden in 1,5 l Wasser unter Rühren suspendiert. Zu dieser Suspension tropft man unter Rühren 115,3g (1,0 Mol) Orthophosphorsäure (85%ig) als verdünnte wässrige Lösung zu. Nach 1 stündigem Rühren bei 60 °C bildet sich ein voluminöser Niederschlag.

Anschließend wird noch 60 Min. nachgerührt, auf Raumtemperatur abgekühlt, der entstandene weiße Niederschlag abgesaugt, mit Wasser nachgewaschen und bei 120 °C gewichtskonstant getrocknet.
Ausbeute: 185,0 g entsprechend 84% d.Th.

### Beispiel 5: Synthese von Dimelamin-Zinkbisphosphat-Monohydrat (M₂ZP₂) C₆H₁₆N₁₂O₈P₂Zn_{*}H₂O (MW =529,6)

2547g (20,2Mol) Melamin und 814 g (10,0 Mol) Zinkoxid werden in 15 l Wasser unter Rühren suspendiert. Zu dieser Suspension tropft man unter Rühren 2306g (20,0 Mol) Orthophosphorsäure (85%ig) als verdünnte wässrige Lösung zu. Nach 1 stündigem Rühren bei 60 °C bildet sich ein voluminöser Niederschlag. Anschließend wird noch 60 Min. nachgerührt, auf Raumtemperatur abgekühlt, der entstandene weiße Niederschlag abgesaugt, mit Wasser nachgewaschen und bei 120 °C gewichtskonstant getrocknet (Produkt 5-I).
Ausbeute: 5118g entsprechend 96,6% d.Th.

Das so erhaltene Produkt 5-I wurde 4h bei 290 °C getempert (Produkt 5-II). Gew.-Verlust: 7,3%, wobei Dimelamin-Zinkdiphosphat resultiert.

### Elementaranalyse:

gefunden: C: 14,67%; H: 2,40% ; N: 33,58%; Zn: 12,67%; P: 12,34%
berechnet: C: (14,6%); H:(2,85%); N: (34,05%); Zn: (13,25%); P: (12,55%)

### Beispiel 6: Synthese von Dimelamin-Zinkbisphosphat-Monohydrat (M₂ZP₂) C₆H₁₆N₁₂O₈P₂Zn_{*}H₂O (MW =529,6) nach dem Sprühverfahren

In einem GPCG 3.1 Wirbelschichtgranulator der Fa. GLATT GmbH werden 2547g Melamin (20,2Mol) und 814g (10,0Mol) ZnO vorgelegt. Das Feststoffbett wird mit einem Luftstrom kontinuierlich aufgewirbelt und darauf eine Lösung hergestellt aus 2306g (20.0Mol) Orthophosphorsäure in 1000ml Wasser aufgesprüht. Die Fließbettemperatur wird dabei konstant zwischen 70 - 80 °C gehalten, wobei die Granulate gleichzeitig abtrocknen und ein rieselfähiges, nichtstaubendes Granulat entsteht. Die Hauptfraktion (>80%) weist einen Körnungsbereich von 200 - 400 µm. auf. Der Restwassergehalt liegt bei ca. 0,5 - 1 %. Ausbeute: quantitativ

Das so erhaltene Produkt 6-I wurde 4h bei 290 °C getempert (Produkt 6-II). Gew.-Verlust: 8,0%, wobei Dimelamin-Zinkdiphosphat resultiert.

### Elementaranalyse:

gefunden: C: 14,06%; H: 2,48%; N: 33,64%; Zn: 12,79%; P: 11,98%
berechnet: C: (14,6%); H: (2,85%); N: (34,05%); Zn: (13,25%); P: (12,55%)

### Vergleichsbeispiel 7: Synthese von Dimelamin-Pyrophosphato-Zinkat [Mel-H]⁺₂[ZnP₂O₇]²⁻ (gemäß EP 2 183 314 B1)

**Stufe I:** Herstellung von Zink-bis-Dihydrogenphosphat:
   81,37g (1 Mol) ZnO werden unter Rühren mit 230,6g (2Mol) Orthophosphorsäure
   (85%ig) in ca. 500ml Wasser umgesetzt. Nach 2stündigem Rühren auf 90°C hatte das ZnO reagiert.
**Stufe II:** Umsetzung von Zink-Bisdihydrogenphosphat mit Melamin:
   252,2g Melamin werden in ca. 500ml Wasser suspendiert. Das Zink-Bisdihydrogenphosphat (Stufe **I**) wird unter Rühren zudosiert und Das Produkt nach Filtration bei 120 °C getrocknet.
   Ausbeute: 503,0g entsprechend 95% d. Th.
**Stufe III:** 200g Produkt von Stufe-II werden 3h bei 300 °C getempert. Gew.-Verlust: 6,5%

An den Versuchsprodukten (Beispiele 1 bis 7) wurden pH-Messungen und Leitfähigkeit von 10%igen wässrigen Suspensionen, nach Filtration, bei Raumtemperatur gemessen. Ferner wurden TGA/DSC-Messungen (Aufheizrate: 10K/Min; N₂/50) mit einem Netzsch STA 409-Gerät durchgeführt (siehe Tabelle 1).

**Tabelle 1: Kenndaten der Versuchspropdukte**

| Beispiel | pH-Werte | |
|---|---|---|
| | Produkt-I | Produkt-II |
| 1 (MMP) | 6,97 | - |
| 2 (MZP) | 5,2 | 5,6 |
| 3 (GMP) | 10,1 | 8,48 |
| 4 (GZP) | 7,48 | 6,57 |
| 5 (M₂ZP₂) | 4,89 | 5,5 |
| 7 (Vergleichsprodukt*) | 4,54 | 5,5 |

| | | |
|---|---|---|
| *hergestellt gemäß EP 2 183 314B1 | | |

Als Flammschutzmittel wurden folgende Zinkverbindungen weiter untersucht: (s. Tab. 2)

**Tab. 2: Physikalische Eigenschaften von Zink-Verbindungen**

| Beispiel | Leitfähigkeit [µS/cm] | | Gewichtsverlust bei 300 °C in % |
|---|---|---|---|
| | Produkt-I | Produkt-II | Produkt-II |
| 2 (MZP) | 136 | 138 | 0,5 |
| 4 (GZP) | 180 | 82 | 0,3 |
| 5 (M₂ZP₂) | 255 | 209 | 0,3 |
| 7 (Vergleichsprodukt*) | 490 | 560 | 0,6 |

Die erfindungsgemäßen Produkte 2, 4 und 5 zeigen verbesserte Leitfähigkeitswerte im Vergleich zum Leitfähigkeitswert von Produkt 7. Die Gewichtsverluste bei 300 °C sind ebenfalls geringer als beim Vergleichsprodukt 7.

### Beispiel 8: (Anwendung als Flammschutzmittel in PA)

Materialien: PA 6.6 (Durethan A30S; Fa. LANXESS); Glasfaser (ThermoFlow^{®} 671; 10µmx4mm; Fa. John Manville); Melaminpolyphosphat MPP (Melapur 200; Fa. BASF), Zn(2'-Hydroxy[1,1-Biphenyl-2-yl-2-phosphinat)₂ (eigenes Produkt), Dimelamin-Zinkdiphosphat (Beispiel 5).

Die Komponenten wurden auf einem Leistritz ZSE 27HP-44D (0 = 27 mm, 44 D), Doppelschneckenextruder kompoundiert und granuliert. Aus diesen Granulaten wurden via Spritzgußtechnik normgerechte Prüfkörper (d = 1,6mm) gefertigt. Die Brandtestprüfung wurde gemäß UL-94-Test durchgeführt. Die Ergebnisse sind in Tab. 2 zusammengestellt.

**Tab. 2: Flammschutzprüfung**

| Komponenten | A | B |
|---|---|---|
| PA 6.6 | 47,5% | 48,0% |
| Glasfaser | 30,0% | 30,0% |
| Flammschutz-Komponenten: | | |
| (2'-Hydroxy[1,1'-Biphenyl-2-yl-2-phosphinat)₂Zn | 12,5% | 12,0% |
| MPP | -- | 10,0% |
| M₂ZP₂ | 10,0% | -- |
| UL-94-Test | V-0 | V-0 |

## Patentansprüche

1. Verfahren zur Herstellung von Azin-Metallphosphaten der allgemeinen Formel [I],
[(A - H)⁽⁺⁾ [M^{m+} (PO₄)ₓ⁽³⁻⁾ (P₂O₇)_{y}⁽⁴⁻⁾]⁽⁻⁾ _{*}pH₂O]_{z} [I]
wobei (A - H)⁽⁺⁾ ausgewählt ist aus (Melamin-H)⁺ der Formel (I-H), (Melam-H)⁺ der Formel (II-H), [(Aceto)Benzoguanamin-H]⁺ der Formel (III-H), wobei R Methyl oder Phenyl, oder [(Amino)Guanidin-H)⁺ der Formel (IV H) ist, und R'Wasserstoff oder Amino ist, 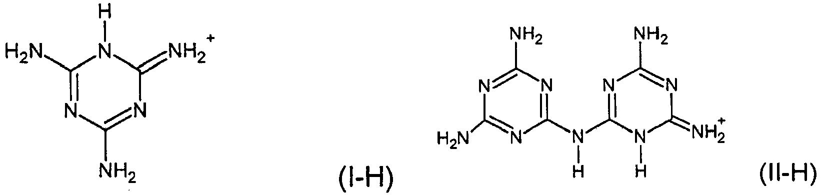 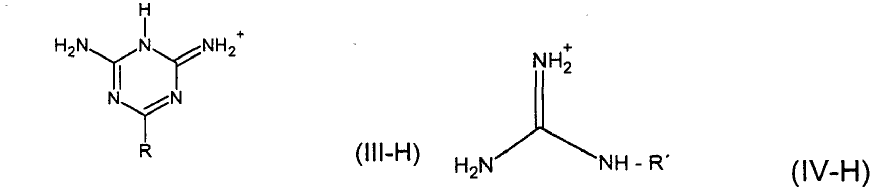
M = Cu, Mg, Ca, Zn, Mn, Fe, Co, Ni, TiO, ZrO, VO, B, Si, AI, Sb, La, Ti, Zr, Ce, Bi oder Sn ist,
m = 2 oder 3 ist,
x und y unabhängig voneinander 0 oder 1 sind,
p eine ganze Zahl von 0 bis 4 ist und
z eine ganze Zahl >5 ist,
wobei gilt, dass 1 + m = 3x + 4y ist,
durch Umsetzen eines Azinedukts (A) mit einem Metalloxidedukt (B) und Orthophosphorsäure (C),
wobei das Azinedukt (A) ausgewählt ist aus Melamin der Formel (I-H), Melam der Formel (II-H), Guanamin der Formel (III-H) und Guanidin(bi)karbonat der Formel (IV-H), und das Metalloxidedukt (B) ausgewählt ist aus Metalloxiden, Metallhydroxiden und/oder Metallkarbonaten.

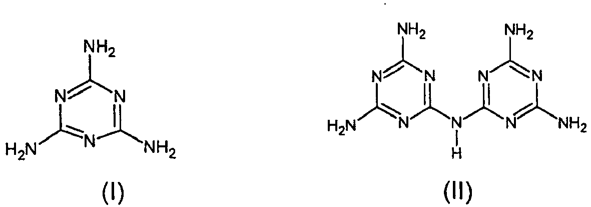

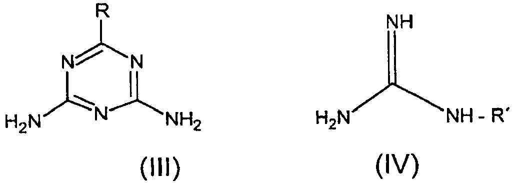

2. Verfahren nach Anspruch 1, **dadurch gekennzeichnet, dass** in Komponente (B) das Metall der Metalloxide oder Metallhydroxide Cu, Mg, Ca, Zn, Mn, Fe, Co, Ni, Ti, Zr, VO, B, Si, AI, Sb, La, Ce, Bi oder Sn ist und das Metall der basischen Metallkarbonate oder der Metallkarbonate Zn, Mg, Zr oder Cu ist.

3. Verfahren nach einem der Ansprüche 1 oder 2, **dadurch gekennzeichnet, dass** die Komponenten (A) und (B) als Gemisch, bevorzugt als Suspension, in Wasser vorgelegt werden und Orthophosphorsäure (C) zudosiert wird.

4. Verfahren nach einem der Ansprüche 1 bis 3, **dadurch gekennzeichnet, dass** die Umsetzung bei 20 bis 90 °C, bevorzugt bei 30 bis 70 °C, durchgeführt wird.

5. Verfahren nach einem der Ansprüche 1 bis 4, **dadurch gekennzeichnet, dass** die Komponenten (A):(B):(C) im molaren Verhältnis (1 bis 3):(1):(1 bis 3) vorliegen, wobei außerhalb der Stöchiometrie von 1 :1 :1 zusätzlich Azinphosphate vorliegen.

6. Verfahren nach einem der Ansprüche 1 bis 5, **dadurch gekennzeichnet, dass** dieses in einem horizontalen oder vertikalen Mischer, bevorzugt einem Schaufelmischer, Granulator oder Sprühtrockner, durchgeführt wird.

7. Verfahren nach einem der Ansprüche 1 bis 6, **dadurch gekennzeichnet, dass** das Reaktionsprodukt bei 220 bis 350 °C, bevorzugt bei 250 bis 300 °C, getempert wird.

8. Verwendung einer Zusammensetzung, umfassend
(i) ein Azin-Metallphosphat der Formel [I], wie in Anspruch 1 definiert, wobei (A-H)⁽⁺⁾ (Guanamin-H)⁺ der Formel (III-H) ist, wobei R Methyl oder Phenyl ist,
(ii) eine von der Komponente (i) verschiedene metallhaltige Komponente und
(iii) gegebenenfalls eine metallfreie Komponente,
als Flammschutzmittel in einem Polymer oder einer Polymermischung, Papier, Textilien oder Wood Plastic Composites (WPC).

9. Verwendung nach Anspruch 8, dudurch gekennzeichnet, dass das Polymer ein Thermoplast ist, ausgewählt aus der Gruppe, bestehend aus Polyamid, Polycarbonat, Polyolefin, Polystyrol, Polyester, Polyvinylchlorid, Polyvinylalkohol, ABS und Polyurethan und Biopolymere, basierend auf Polymilchsäure und/oder Stärke, oder ein Duroplast ist, vorzugsweise ausgewählt aus der Gruppe, bestehend aus Epoxidharzen, Phenolharz und Melaminharz.

## Claims

1. Process for preparing azine metal phosphate of the general formula [I],
[(A-H)⁽⁺⁾[M^{m+}(PO₄)ₓ⁽³⁻⁾(P₂O₇)_{y}⁽⁴⁻⁾]⁽⁻⁾•pH₂O]_{z} [I]
where (A-H)⁽⁺⁾ is selected from (melamine-H)⁺ of formula (I-H), (melam-H)⁺ of formula (II-H), [(aceto)benzoguanamine-H]⁺ of formula (III-H), where R is methyl or phenyl, or [(amino)guanidine-H)⁺ of formula (IV-H), and R' hydrogen or amino is, 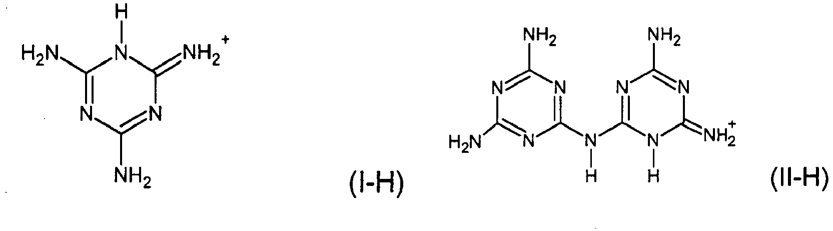 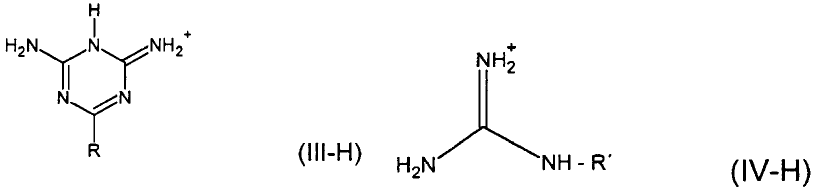
M = Cu, Mg, Ca, Zn, Mn, Fe, Co, Ni, TiO, ZrO, VO, B, Si, Al, Sb, La, Ti, Zr, Ce, Bi or Sn,
m = 2 or 3,
x and y are each, independently of one another, 0 or 1,
p is an integer from 0 to 4 and
z is an integer > 5,
where 1 + m = 3x + 4y,
by reacting an azine starting material (A) with a metal oxide starting material (B) and orthophosphoric acid (C),
wherein the azine starting material (A) is selected from melamine of formula (I-H), melam of formula (II-H), guanamine of formula (III-H) and guanidine(bi)carbonate of formula (IV-H), and the metal oxide starting material (B) is selected from metal oxides, metal hydroxides and/or metal carbonates.

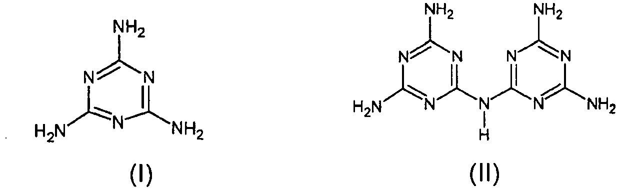

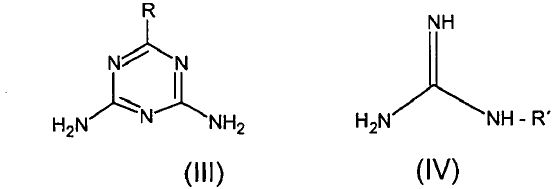

2. Process according to claim 1,
**characterized in that** in component (B) the metal of the metal oxides or metal hydroxides is Cu, Mg, Ca, Zn, Mn, Fe, Co, Ni, Ti, Zr, VO, B, Si, Al, Sb, La, Ce, Bi or Sn and the metal of the alkaline metal carbonates or the metal carbonates is Zn, Mg, Zr or Cu.

3. Process according to claims 1 or 2,
**characterized in that** the components (A) and (B) are charged as a mixture, preferably as a suspension, in water and orthophosphoric acid (C) is added.

4. Process according to any of claims 1 to 3,
**characterized in that** the reaction is carried out at from 20 to 90°C, preferably from 30 to 70°C.

5. Process according to any of claims 1 to 4,
**characterized in that** the components (A):(B):(C) are present in a molar ratio of (1 to 3):(1):(1 to 3), with azine phosphates being additionally present outside the stoichiometry of 1:1:1.

6. Process according to any of claims 1 to 5,
**characterized in that** the process is carried out in a horizontal or vertical mixer, preferably a paddle mixer, granulator or spray dryer.

7. Process according to any of claims 1 to 6,
**characterized in that** the reaction product is tempered at from 220 to 350°C, preferably from 250 to 300°C.

8. Use of a composition, comprising
(i) an azine metal phosphate of formula (I) as defined in claim 1,
where (A-H)⁽⁺⁾ is (guanamine-H)⁺ of the formula (III-H), where R is methyl or phenyl,
(ii) a metal-containing component different from the component (i) and
(iii) optionally a metal-free component,
as flame retardant in a polymer or a polymer mixture, paper, textiles or Wood Plastic Composites (WPC).

9. Use according to claim 8,
**characterized in that** the polymer is a thermoplastic, selected from the group, consisting of polyamide, polycarbonate, polyolefin, polystyrene, polyester, poly vinyl chloride, poly vynil alcohol, BAS und polyurethane, and biopolymere, based on polylactide and/or starch, or is a thermoset, preferably selected from the group, consisting of epoxy resins, phenolic resins and melamine resins.

## Revendications

1. Procédé de fabrication de phosphates azino-métalliques de formule générale [I],
[(A - H)⁽⁺⁾ [M^{m+} (PO₄)ₓ⁽³⁻⁾ (P₂O₇)_{y}⁽⁴⁻⁾]⁽⁻⁾_{*} pH₂O]_{z} [I]
dans laquelle (A - H)⁽⁺⁾ est sélectionné parmi (mélamine-H)⁺ de formule (I-H), (mélam-H)⁺ de formule (II-H), [(acéto)benzoguanamine-H]⁺ de formule (III-H), où R est du méthyle ou du phényle ou [(amino)guanidine-H]⁺ de formule (IV-H), et R' est de l'hydrogène ou de l'amino, 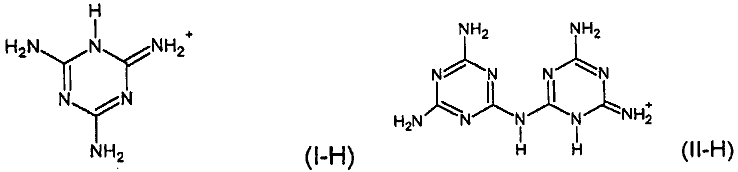 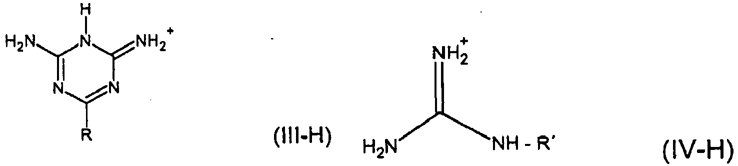
M = Cu, Mg, Ca, Zn, Mn, Fe, Co, Ni, TiO, ZrO, VO, B, Si, AI, Sb, La, Ti, Zr, Ce, Bi ou Sn,
m = 2 ou 3,
x et y = 0 ou 1 indépendamment l'un de l'autre,
p est un nombre entier de 0 à 4 et
z est un nombre entier > 5,
à condition que 1 + m = 3x + 4y,
par réaction d'un éduit d'azine (A) avec un éduit d'oxyde de métal (B) et de l'acide orthophosphorique (C),
l'éduit d'azine (A) étant sélectionné parmi la mélamine de formule (I-H), le mélam de formule (II-H), la guanamine de formule (III-H) et le (bi)carbonate de guanidine de formule (IV-H), et l'éduit d'oxyde de métal (B) étant sélectionné parmi les oxydes de métal, les hydroxydes de métal et/ou les carbonates de métal

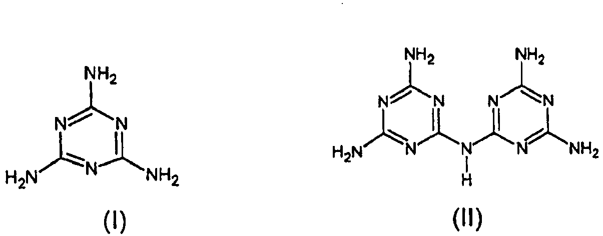

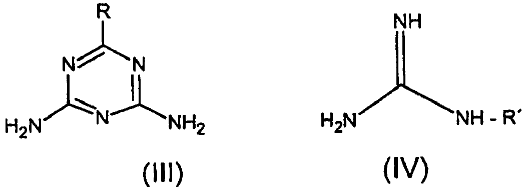

2. Procédé selon la revendication 1, **caractérisé en ce que** dans le composant (B), le métal des oxydes de métal ou des hydroxydes de métal est Cu, Mg, Ca, Zn, Mn, Fe, Co, Ni, Ti, Zr, VO, B, Si, AI, Sb, La, Ce, Bi ou Sn et que le métal des carbonates de métal basiques ou des carbonates de métal est Zn, Mg, Zr ou Cu.

3. Procédé selon l'une des revendications 1 ou 2, **caractérisé en ce que** les composants (A) et (B) sont placés dans l'eau sous forme de mélange, de préférence sous forme de suspension, et de l'acide orthophosphorique (C) est ajouté.

4. Procédé selon l'une des revendications 1 à 3, **caractérisé en ce que** la réaction est réalisée à une température de 20 à 90 °C, de préférence de 30 à 70 °C.

5. Procédé selon l'une des revendications 1 à 4, **caractérisé en ce que** les composants (A):(B):(C) sont présents dans le rapport molaire (1 à 3):(1):(1 à 3), des phosphates d'azine étant présents en plus en dehors de la stoechiométrie de 1:1:1.

6. Procédé selon l'une des revendications 1 à 5, **caractérisé en ce que** celui-ci est mis en oeuvre dans un mélangeur horizontal ou vertical, de préférence un mélangeur à palettes, un granulateur ou un séchoir à pulvérisation.

7. Procédé selon l'une des revendications 1 à 6, **caractérisé en ce que** le produit de réaction est trempé à une température de 220 à 350 °C, de préférence de 250 à 300 °C.

8. Utilisation d'un composé comprenant
(i) un phosphate azino-métallique de formule [1] tel que défini dans la revendication 1, où (A-H)⁽⁺⁾ est (guanamine-H)⁺ de formule (III-H), dans laquelle R est du méthyle ou du phényle,
(ii) un composant métallique différent du composant (i) et
(iii) le cas échéant un composant exempt de métal
comme agent ignifuge dans un polymère ou un mélange de polymères, du papier, des textiles ou des composites bois-plastiques (WPC).

9. Utilisation selon la revendication 8, **caractérisée en ce que** le polymère est un plastique thermoplastique, de préférence sélectionné dans le groupe constitué du polyamide, du polycarbonate, de la polyoléfine, du polystyrène, du polyester, du chlorure de polyvinyle, de l'alcool polyvinylique, de l'ABS et du polyuréthane et des biopolymères à base d'acide polylactique et/ou d'amidon, ou un plastique thermodurcissable, de préférence sélectionné dans le groupe constitué de la résine époxyde, de la résine phénolique et de la résine de mélamine.
